# EUROPEAN PATENT SPECIFICATION

(11) **EP 0 576 689 B1**
(45) Date of publication and mention of the grant of the patent: **12.06.1996**
(21) Application number: 90850062.2
(22) Date of filing: 12.02.1990
(51) Int. Cl.: A47F 9/04, G01G 19/414, G07G 1/00

(54) **Tranportation and weighing device for checkout desks and the like**
Förder- und Wägevorrichtung für Selbstbedienungskassentheken und dergleichen
Dispositif de transport et pesage pour caisse-comptoirs et similaires

(30) Priority: 13.02.1989 SE 8900474
(43) Date of publication of application: 05.01.1994
(73) Proprietor: ABO METALL AB, S-550 09 Jönköping (SE)
(72) Inventor: Emme, Nils-Erik, S-554 48 Jönköping (SV); Olsson, Rune, S-334 31 Anderstorp (SV)
(74) Representative: Modin, Jan

(56) References cited:
- BE-A- 899 019
- GB-A- 2 097 544
- US-A- 4 392 535

## Description

This invention relates to a device for transportation and weighing of goods. The device is primarily intended for checkout desks in shops and stores but it can also be used e.g. by packaging and price labeling of goods or handling of goods in warehouses. A device having all features of the first part of Claim 1 is known, for instance, from BE-A-899 019. The device described there prevents frauds caused by an incorrect indication of the weight of an article on the bar code.

Checkout desks in stores and supermarkets, so called fast checkouts, have one or more conveyors to transport the goods past an operator. Further there is a cash register for registration of price and other information. For the weighing of goods there is a scale and moreover there is often a scanner for reading of bar codes. The scale may be connected to the cash register so that information about the weight of the goods is automatically transferred to it for price calculation.

The scale device in checkout desks has hereto been positioned either by the side of the operator or opposite to the operator on the remote side of the conveyor. When weighing the goods must then be lifted or pushed from the conveyor to the table of the scale.

The table of the scale occupies space and can be hampering for both operator and customers. The movements that are required for the weighing may cause health problems for the operator as these movements cause special strains mainly on the back of the neck and the shoulders.

One objection of the present invention is to eliminate the problems mentioned above and it may also bring other advantages, i.e. faster weighing. A device for conveying and weighing of goods at checkout desks and the like according to the invention has a scale integrated with the conveyors. This device is such that the weighing takes place while the goods is on the conveyor. Hereby the manual transfer of the goods is eliminated and space is made free at the side of the conveyor. A device according to the invention has several consecutively after each other arranged essentially horizontal conveyors. One of these, the scale conveyor, transports the goods over a scale table against which the conveyor rests. When a weighing shall take place the conveyor is stopped and the weight of the goods is registered whereupon the conveyor is started.

The device comprises three conveyors, the first of which transports the goods up to the scale conveyor, the second is the scale conveyor and the third is a conveyor for further transport of the goods to a place where they are collected. A scanner for reading of bar codes is suitably positioned at the start of the scale conveyor, i.e. by that end of the conveyor where the goods are brought onto it. The scale device comprises a scale table which by a signaling device is mounted onto a stand. The conveyor of the scale device passes rolls which are also mounted onto the scale table. One of these rolls is equipped with a driving arrangement for driving of the conveyor. The units at the checkout desk are so connected that the scanner stops the conveyor of the weighing device if the price of the goods cannot be read from a bar code. Thereafter the goods is being weighed and information about the weight of the goods is registered in the cash register whereupon the conveyor is started again.

Taring and adjusting of the scale must be done so that the inaccuracy of the weighing is as small as possible. For weights below 10 kg the inaccuracy must not be more than ± 5 g. In order to obtain this, taring and adjusting of the scale is made on certain occasions, i.e. after each single weighing or when the purchases of the customer is summarized in the cash register Taring and adjusting is made automatically on certain occasions but can also be initiated by the operator.

The movemnts of the table of the scale are very small and the maximum deviation from the starting point is in the order of 5 mm. Besides by the goods which is being weighed the table of the scale is also affected by other forces, for example by the conveyor and the driving device. It is essential for correct weighing that these forces are not changed between different weighing occasions. The design of the driving device for the conveyor is here of deciding importance. The driving may be either by a motor, which is mounted onto the table of the scale and which by a suitable gear and e.g a belt is continously connected to the driving roll of the conveyor. When weighing, the motor is stopped e.g. by switching off the supply of current. The only thing which may then change the force by which the driving arrangement affects the table of the scale is the connection between the motor and an outer energy source. This connection preferably is an electric cable. The driving of the conveyor can also be so arranged that the motor is mounted e.g onto the stand which carries the weighing device and through a clutch drives the driving roll of the conveyor. When weighing this is released from the driving motor which then cannot affect the weighing device at the weighing.

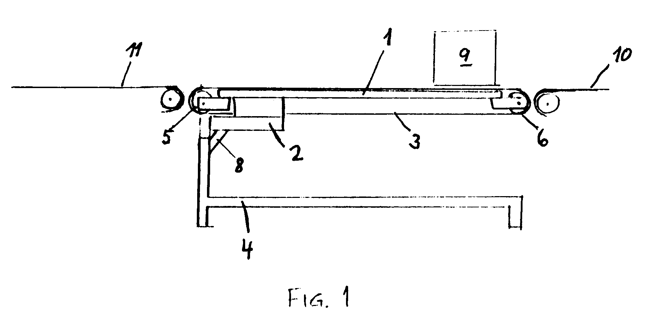

The invention shall now be further described by the preferred mode shown in Fig. 1.

In the Figure there is outlined a part of a checkout desk with three conveyors, whereby a first conveyor 10 is intended for the transport of goods to the weighing device which has a conveyor 3, from which the goods are brought by a conveyor 11 to a place for collection not shown in the Figure. The weighing device comprises a table 1 mounted onto a signalling device 2. The signalling device may be for example a strain gauge and is intended to give an electrical signal which corresponds to the weight of a piece of goods on the conveyor. The signalling device is mounted onto a stand 4 by a holder 8. The table of the scale also has arrangements to carry rolls 5, 6 which carry and drive the conveyor band 3. The driving device suitably affects upon the roll 5 which is at the end of the upper part of the conveyor. As described above the driving may be either by a motor mounted together with the table of the scale or via a clutch. These arrangements are of well known kinds and not shown in the Figure. The driving arrangement can be controlled by signals from a scanner 9, which is positioned at the beginning of the conveyor seen in the direction of movement of the goods. The goods moves from the right to the left in the Figure. When a piece of goods passes by the scanner 9 this tries to read a bar code on the goods. If the price of the goods cannot be read in this way the conveyor 3 is stopped and weighing takes place whereupon the conveyor is started again The operation of the conveyor can hereby be fully automatically controlled so that the conveyor is stopped by the scanner and restarted when the weight has been registered. There should also be posibilities for the operator to stop and start the conveyor as he wishes.

Within the scope of the invention a weighing device according to the invention can in different ways be a part of checkout desks or the like. Also the signal which corresponds to the weight of the goods and is obtained by the weighing can be treated in different ways and for example in the cash register be combined with information from an index with prices for different kinds of goods.

## Claims

1. A device for transporting and weighing of goods at a checkout desk, comprising
- a number of essentially horizontal conveyors (10,3,11) arranged so as to consecutively follow one another,
- a weighing device (1,2) with a scale table (1) located under one of said horizontal conveyors, which constitutes a scale conveyer (3), so that said goods can be weighed while being located on said scale conveyor,
- a driving device for moving said scale conveyor (3) so as to transport said goods from a preceding conveyor (10) to a succeeding conveyor (11), and
- a scanner (9) for reading bar codes on said goods while being located on said scale conveyor (3), said scanner being connected to said driving means for controlling the movement of the scale conveyor,
**characterized** in that
- said scale conveyor (3) is integrated with said weighing device (1,2), said scale table (1) carrying a driving roll (5) of said scale conveyor (3) as well as a driving device being operatively connected to said driving roll, and
- said scanner (9) is connected to said driving device in such a way that, if no bar code is read by the scanner when a piece of goods located on the scale conveyor (3) passes the scanner, the scale conveyor (3) is halted with the piece of goods remaining thereon, whereupon the piece of goods is weighed by means of the weighing device (1,2), and the scale conveyor (3) is then restarted to continue transport of said piece of goods to said succeeding conveyor (11).

2. A device according to claim 1**, characterized** in that the driving device is a motor, the outgoing shaft of which is continuously mechanically connected for the driving of the scale conveyor.

3. A device according to claim 1**, characterized** in that the driving device comprises clutch parts for connection with a driving motor.

4. A device according to any one of claims 1 - 3, **characterized** in that the scale table (1) is carried by a signalling unit (2) of an electronic weighing device.

5. A device according to any one of claims 1 - 4, **characterized** in that it is connected to a cash register to which information is sent about the weight of the goods.

6. A device according to any one of claims 1 - 5, **characterized** in that taring of the weighing device is made automatically after each summarizing in the cash register.

7. A device according to any one of claims 1 - 6, **characterized** in that taring of the weighing device is made automatically after each weighing occasion.

## Patentansprüche

1. Vorrichtung für das Fördern und Wiegen von Waren an einer Selbstbedienungs-Kassentheke, enthaltend:
eine Anzahl im wesentlichen horizontaler Förderbänder (10, 3, 11), so angeordnet, daß sie aufeinander folgen,
eine Wiegevorrichtung (1, 2) mit einem Waagentisch (1), der unter einem der horizontalen Förderbänder angeordnet ist, was ein Waagen-Förderband (3) ergibt, so daß die Waren gewogen werden können während sie auf dem Waagen-Förderband angeordnet sind, eine Antriebsvorrichtung zum Bewegen des Waagen-Förderbandes (3), um die Güter von einem vorhergehenden Förderband (10) auf ein darauffolgendes Förderband (11) zu transportieren, und
ein Abtaster (9) zum Lesen von Streifencodes auf den Waren, während sie auf dem Waagen-Förderband (3) angeordnet sind, wobei der Abtaster mit der Antriebsvorrichtung zur Steuerung der Bewegung des Waagen-Förderbandes verbunden ist,
**dadurch gekennzeichnet**, daß
das Waagen-Förderband (3) mit der Wiegevorrichtung (1, 2) integriert ist, der Waagentisch (1) eine Antriebsrolle (5) des Waagen-Förderbandes (3) sowie eine Antriebsvorrichtung trägt, die im Betrieb mit der Antriebsrolle verbunden ist, und
der Abtaster (9) mit der Antriebsvorrichtung derart verbunden ist, daß im Falle daß kein Streifencode vom Abtaster gelesen wird, ein Warenexemplar auf dem Waagen-Förderband (3) an dem Abtaster vorbeiläuft, und das Waagen-Förderband (3) mit dem darauf verbleibenden Warenexemplar angehalten wird, worauf das Warenexemplar mit Hilfe der Wiegevorrichtung (1, 2) gewogen wird, und daß das Waagen-Förderband (3) wieder angelassen wird, um den Transport des Warenexemplars an das darauffolgende Förderband (11) fortzusetzen.

2. Vorrichtung nach Anspruch 1, dadurch gekennzeichnet, daß die Antriebsvorrichtung ein Motor ist, dessen Abtriebswelle kontinuierlich mechanisch für den Antrieb des Waagen-Förderbandes vorgesehen ist.

3. Vorrichtung nach Anspruch 1, dadurch gekennzeichnet, daß die Antriebsvorrichtung Kupplungsteile für die Verbindung mit einem Antriebsmotor enthält.

4. Vorrichtung nach einem der Ansprüche 1-3, dadurch gekennzeichnet, daß
der Waagentisch (1) von einer Signalisiereinheit (2) einer elektronischen Wiegevorrichtung getragen wird.

5. Vorrichtung nach einem der Ansprüche 1-4, dadurch gekennzeichnet, daß
sie mit einer Registrierkasse verbunden ist, der über das Gewicht der Waren Informationen zugeleitet werden.

6. Vorrichtung nach einem der Ansprüche 1-5, dadurch gekennzeichnet, daß
das Tarieren der Wiegevorrichtung nach jeder Summierung in der Registrierkasse automatisch vorgenommen wird.

7. Vorrichtung nach einem der Ansprüche 1-6, dadurch gekennzeichnet, daß das Tarieren der Wiegevorrichtung nach jedem Wiegevorgang automatisch durchgeführt wird.

## Revendications

1. Dispositif pour le transport et le pesage de marchandises à un comptoir de caisse, comprenant :
- un certain nombre de transporteurs sensiblement horizontaux (10, 3, 11) disposés les uns après les autres,
- un dispositif de pesage (1, 2) avec un plateau de balance (1) situé sous un desdits transporteurs horizontaux, qui constitue un transporteur à balance (3), de manière que lesdites marchandises puissent être pesées tandis qu'elles se trouvent sur ledit transporteur à balance,
- un dispositif d'entraînement pour déplacer ledit transporteur à balance (3) afin de transporter lesdites marchandises d'un premier transporteur (10) à un transporteur suivant (11), et
- un scanner (9) pour lire les codes à barres sur lesdites marchandises tandis qu'elles se trouvent sur ledit transporteur à balance (3), ledit scanner étant relié audit dispositif d'entraînement pour commander le déplacement du transporteur à balance,
caractérisé en ce que
- ledit transporteur à balance (3) est intégré audit dispositif de pesage (1, 2), ledit plateau de balance (1) supportant un rouleau d'entraînement (5) dudit transporteur à balance (3) ainsi qu'un dispositif d'entraînement étant fonctionnellement couplé audit rouleau d'entraînement, et
- ledit scanner (9) est relié audit dispositif d'entraînement de manière que, si aucun code à barres n'est lu par le scanner lorsqu'une marchandise située sur le transporteur à balance (3) passe devant le scanner, le transporteur à balance (3) est arrêté avec la marchandise demeurant sur le transporteur, puis la marchandise est pesée au moyen du dispositif de pesage (1, 2), et le transporteur à balance (3) redémarre alors pour continuer d'acheminer ladite marchandise jusqu'audit transporteur suivant (11).

2. Dispositif selon la revendication 1, caractérisé en ce que le dispositif d'entraînement est un moteur, dont l'arbre de sortie est couplé mécaniquement en continu pour l'entraînement du transporteur à balance.

3. Dispositif selon la revendication 1, caractérisé en ce que le dispositif d'entraînement comprend un accouplement pour connexion avec un moteur d'entraînement.

4. Dispositif selon l'une quelconque des revendications 1 à 3, caractérisé en ce que le plateau de balance (1) est supporté par un dispositif indicateur (2) d'un dispositif de pesage électronique.

5. Dispositif selon l'une quelconque des revendications 1 à 4, caractérisé en ce qu'il est relié à une caisse enregistreuse à laquelle des informations sont envoyées sur le poids des marchandises.

6. Dispositif selon l'une quelconque des revendications 1 à 5, caractérisé en ce que la mise à zéro du dispositif de pesage est effectuée automatiquement après chaque récapitulation dans la caisse enregistreuse.

7. Dispositif selon l'une quelconque des revendications 1 à 6, caractérisé en ce que la mise à zéro du dispositif de pesage est effectuée automatiquement après chaque pesage.
